# EUROPÄISCHE PATENTANMELDUNG

(11) **EP 4 280 320 A2**
(43) Veröffentlichungstag der Anmeldung: **22.11.2023**
(21) Anmeldenummer: 23169658.4
(22) Anmeldetag: 25.04.2023
(51) Int. Cl.: H01M 8/04119, H01M 8/04291

(54) **BRENNSTOFFZELLEN-ABGASANLAGE**

(30) Priorität: 20.05.2022 DE 102022112680
(71) Anmelder: Purem GmbH, 66539 Neunkirchen (DE)
(72) Erfinder: Hammer, Jochen, Stuttgart (DE); Birgler, Markus, Wernau (DE); Wink, Peter, Göppingen (DE); Schaller, Patrick, Bopfingen (DE); Wacker, Andreas, Plochingen (DE)
(74) Vertreter: Ruttensperger Lachnit Trossin Gomoll

(57) **Zusammenfassung**

Eine Brennstoffzellen-Abgasanlage für ein Brennstoffzellensystem, insbesondere in einem Fahrzeug umfasst eine von Brennstoffzellen-Abgas (B) durchströmbare Brennstoffzellen-Abgasleitung (12) und Kondensatoreinheit (31) mit einem von dem Brennstoffzellen-Abgas (B) durchströmbaren Kondensatoreinheit-Körper (90) umfasst.

## Beschreibung

Die vorliegende Erfindung betrifft eine Brennstoffzellen-Abgasanlage, über welche das aus einer Brennstoffzelle abgegebene Prozessgas als Brennstoffzellen-Abgas zur Umgebung abgegeben werden kann.

Um insbesondere bei elektromotorisch betriebenen Fahrzeugen die Energie zum Betreiben der Fahr-Elektromotoren und auch der sonstigen Verbraucher elektrischer Energie in derartigen Fahrzeugen bereitstellen zu können, ist es bekannt, Brennstoffzellen einzusetzen. Im Betrieb einer derartigen Brennstoffzelle wird einem Anodenbereich Wasserstoff bzw. ein stark mit Wasserstoff angereichertes Anodengas zugeführt. Einem Kathodenbereich wird Sauerstoff bzw. sauerstoffhaltige Luft als Kathodengas zugeführt. Unter Umsetzung von Wasserstoff und Sauerstoff zu Wasser wird elektrischer Strom erzeugt. Das wasserstoffentreicherte Anodenabgas und das mit Wasser angereicherte Kathodenabgas verlassen die Brennstoffzelle als Brennstoffzellen-Abgas bzw. Prozessgas. Im Brennstoffzellenbetrieb wird zumindest das Kathodenabgas zur Umgebung abgegeben. In verschiedenen Betriebsphasen, wie zum Beispiel beim Spülen insbesondere des Anodenbereichs vor Beginn des Brennstoffzellenbetriebs, kann auch das Anodenabgas bzw. das in einer derartigen Betriebsphase durch den Anodenbereich geleitete Gas zur Umgebung abgegeben werden.

Es ist die Aufgabe der vorliegenden Erfindung, eine Brennstoffzellen-Abgasanlage für ein Brennstoffzellensystem, insbesondere in einem Fahrzeug, vorzusehen, mit welcher in dem Brennstoffzellen-Abgas mitgeführte Flüssigkeit, insbesondere Wasser, effizient aus dem Brennstoffzellen-Abgas extrahiert werden kann.

Erfindungsgemäß wird diese Aufgabe gelöst durch eine Brennstoffzellen-Abgasanlage für ein Brennstoffzellensystem, insbesondere in einem Fahrzeug, umfassend eine von Brennstoffzellen-Abgas durchströmbare Brennstoffzellen-Abgasleitung und Kondensatoreinheit mit einem von dem Brennstoffzellen-Abgas durchströmbaren Kondensatoreinheit-Körper.

Durch die Kondensatoreinheit wird Flüssigkeit aus dem Brennstoffzellen-Abgas auskondensiert. Es wird somit die Abgabe von insbesondere mit Wasserdampf angereichertem Brennstoffzellen-Abgas zur Umgebung verhindert, so dass insbesondere das Bilden eines Nebels im Bereich eines Endrohrs einer Brennstoffzellen-Abgasanlage vermieden werden kann. Die aus dem Brennstoffzellen-Abgas abgezogene Flüssigkeit kann bei Bedarf wieder in den Brennstoffzellen-Prozess zurückgespeist werden. Auch die Verwendung der auskondensierten Flüssigkeit beispielsweise als Scheibenwaschwasser, zur Reinigung von Sensoren insbesondere bei Fahrzeugen für das autonome Fahren, zur Luftbefeuchtung in Klimaanlagen und dergleichen ist möglich,

Stromabwärts der Kondensatoreinheit kann eine Flüssigkeit-Abscheideeinheit angeordnet sein. Durch das Anordnen der Kondensatoreinheit stromaufwärts einer Flüssigkeit-Abscheideeinheit wird dafür gesorgt, dass auskondensierte Flüssigkeit, also Tröpfchen, in der weiter stromabwärts angeordneten Flüssigkeit-Abscheideeinheit effizient aus dem Brennstoffzellen-Abgas abgeschieden werden kann und gegebenenfalls für verschiedene Prozesse beispielsweise in einem Fahrzeug wieder genutzt werden kann oder in flüssiger Form zur Umgebung abgegeben werden kann.

Für ein besonders effizientes Abscheiden von Flüssigkeit aus dem Brennstoffzellen-Abgas wird vorgeschlagen, dass der Kondensatoreinheit-Körper im Wesentlichen vollständig mit Metallmaterial aufgebaut ist oder/und wenigstens ein von dem Brennstoffzellen-Abgas durchströmbares und an einer Außenseite von einem Kühlmedium umströmbares Kondensatoreinheit-Leitungselement vorzugsweise mit abgeflachtem Strömungsquerschnitt umfasst.

Um eine größtmögliche Oberfläche zur thermischen Wechselwirkung der Kondensatoreinheit mit einem Kühlmedium zu erhalten, kann der Kondensatoreinheit-Körper eine Mehrzahl von parallel zueinander von dem Brennstoffzellen-Abgas durchströmbaren Kondensatoreinheit-Leitungselementen umfassen.

Dabei kann für eine verstärkte Abgabe von Wärme an der Außenseite wenigstens eines, vorzugsweise jedes Kondensatoreinheit-Leitungselements eine Mehrzahl von Wärmeübertragungsrippen vorgesehen sein.

Zur Integration der Kondensatoreinheit in die Brennstoffzellen-Abgasleitung wird vorgeschlagen, dass die Kondensatoreinheit ein mit dem Kondensatoreinheit-Körper verbundenes stromaufwärtiges Kondensatoreinheit-Anschlusselement zum Anschluss der Kondensatoreinheit an die Brennstoffzellen-Abgasleitung umfasst, oder/und dass die Kondensatoreinheit ein mit dem Kondensatoreinheit-Körper verbundenes stromabwärtiges Kondensatoreinheit-Anschlusselement zum Anschluss der Kondensatoreinheit an die Brennstoffzellen-Abgasleitung umfasst.

Für einen leichten, kostengünstig herzustellenden und insbesondere korrosionsresistenten Aufbau kann das stromaufwärtige Kondensatoreinheit-Anschlusselement mit Kunststoffmaterial aufgebaut sein oder/und kann das stromabwärtige Kondensatoreinheit-Anschlusselement mit Kunststoffmaterial aufgebaut sein.

Die Brennstoffzellen-Abgasleitung kann einen zu der Flüssigkeit-Abscheideeinheit führenden stromaufwärtigen Leitungsabschnitt und einen von der Flüssigkeit-Abscheideeinheit weg führenden stromabwärtigen Leitungsabschnitt umfassen. Die Kondensatoreinheit kann dabei im stromaufwärtigen Leitungsabschnitt angeordnet sein.

Zur Abgabe von Flüssigkeit aus dem Brennstoffzellen-Abgasstrom stromabwärts der Kondensatoreinheit kann die Flüssigkeit-Abscheideeinheit einen stromaufwärtigen Abscheideleitungsteil, einen stromabwärtigen Abscheideleitungsteil und einen Öffnungsbereich im Angrenzungsbereich des stromabwärtigen Abscheideleitungsteils an den stromaufwärtigen Abscheideleitungsteil umfassen.

Um auch im Bereich der Flüssigkeit-Abscheideeinheit definierte Strömungsverhältnisse für das Brennstoffzellen-Abgas zu gewährleisten, wird vorgeschlagen, dass ein stromaufwärtiger Endabschnitt des stromabwärtigen Abscheideleitungsteils in einen stromabwärtigen Endabschnitt des stromaufwärtigen Abscheideleitungsteils derart eingreifend positioniert ist, dass zwischen dem stromaufwärtigen Endabschnitt des stromabwärtigen Abscheideleitungsteils und dem stromabwärtigen Endabschnitt des stromaufwärtigen Abscheideleitungsteils eine Flüssigkeitsabscheideöffnung des Öffnungsbereich gebildet ist.

Der Öffnungsbereich kann zu einer Flüssigkeitssammelkammer offen sein, über welche die darin angesammelte Flüssigkeit dann entweder zur Umgebung abgegeben werden kann oder bei Bedarf in den Brennstoffzellen-Prozess zurückgespeist werden kann.

Stromaufwärts des Öffnungsbereichs kann eine Drallstrom-Erzeugungseinheit vorgesehen sein. Durch die Erzeugung eines Drallstroms in dem Brennstoffzellen-Abgasstrom entsteht eine auf die auskondensierte Flüssigkeit einwirkende Fliehkraft, welche die Flüssigkeit nach radial außen beaufschlagt und somit dafür sorgt, dass in dem Öffnungsbereich primär die nach radial außen beförderte Flüssigkeit bzw. ein stark mit derartiger Flüssigkeit angereicherter Teil des Brennstoffzellen-Abgasstroms abgezogen wird.

Die Drallstrom-Erzeugungseinheit kann eine Mehrzahl von bezüglich einer Strömungsmittenachse in Umfangsrichtung aufeinander folgenden, bezüglich der Abgas-Hauptströmungsrichtung angestellten Strömungsablenkelementen umfassen. Auch die Drallstrom-Erzeugungseinheit kann zum Bereitstellen eines sehr leichten Aufbaus im Wesentlichen vollständig mit Kunststoffmaterial aufgebaut sein.

Um im Bereich einer Brennstoffzelle entstehende Geräusche zu dämpfen, kann eine Schalldämpfereinheit vorgesehen sein, welche umfasst:
- ein Schalldämpfergehäuse mit einem Brennstoffzellen-Abgaseintrittsbereich und einem Brennstoffzellen-Abgasaustrittsbereich, wobei der stromaufwärtige Leitungsabschnitt der Brennstoffzellen-Abgasleitung an den Brennstoffzellen-Abgaseintrittsbereich anschließt und der stromabwärtige Leitungsabschnitt der Brennstoffzellen-Abgasleitung an den Brennstoffzellen-Abgasaustrittsbereich anschließt,
- wenigstens eine in dem Schalldämpfergehäuse gebildete Schalldämpferkammer,
wobei die wenigstens eine Schalldämpfer, durch einen Gehäuseboden des Schalldämpfergehäuses von der Flüssigkeitssammelkammer getrennt ist, wobei in dem Gehäuseboden wenigstens eine wenigstens eine Schalldämpferkammer mit der Flüssigkeitssammelkammer zum Flüssigkeitsaustausch verbindende Flüssigkeitsdurchtrittsöffnung vorgesehen ist, und wobei an dem Schalldämpfergehäuse wenigstens eine Flüssigkeitsableitöffnung zum Ableiten von Flüssigkeit aus der wenigstens einen Flüssigkeitssammelkammer vorgesehen ist.

Auch die Schalldämpfereinheit kann zum Erhalt eines leichten, kostengünstig zu realisierenden und korrosionsresistenten Aufbaus im Wesentlichen vollständig mit Kunststoffmaterial aufgebaut sein.

Ebenso kann die Brennstoffzellen-Abgasleitung oder/und dass die Flüssigkeit-Abscheideeinheit im Wesentlichen vollständig mit Kunststoffmaterial aufgebaut sein.

Die vorliegende Erfindung wird nachfolgend mit Bezug auf die beiliegenden Figuren detailliert beschrieben. Es zeigt:
- Fig. 1: eine perspektivische Ansicht einer Brennstoffzellen-Abgasanlage;
- Fig. 2: das Detail II der Brennstoffzellen-Abgasanlage der Fig. 1 vergrößert;
- Fig. 3: die im Detail II dargestellte Kondensatoreinheit im Längsschnitt;
- Fig. 4: eine Längsschnittansicht einer Schalldämpfereinheit der Brennstoffzellen-Abgasanlage der Fig. 1.

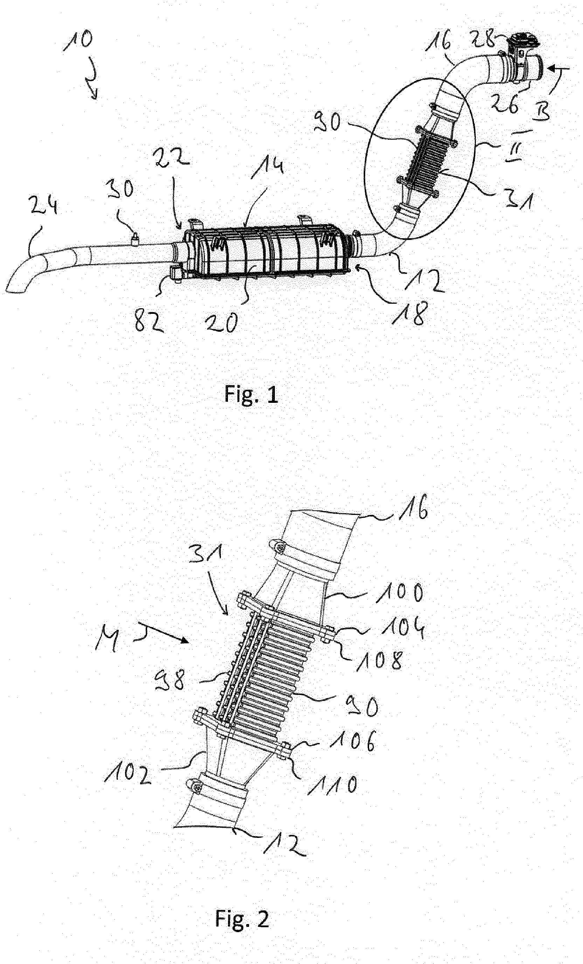

Die Fig. 1 zeigt eine Brennstoffzellen-Abgasanlage 10, welche in Zuordnung zu einem in einem Fahrzeug zur Erzeugung elektrischer Energie eingesetztem Brennstoffzellensystem vorgesehen sein kann.

Die Brennstoffzellen-Abgasanlage 10 umfasst eine allgemein mit 12 bezeichnete und von Brennstoffzellen-Abgas B durchströmbare Brennstoffzellen-Abgasleitung 12 und eine in die Brennstoffzellen-Abgasleitung 12 integrierte Schalldämpfereinheit 14. Ein stromaufwärtiger Leitungsabschnitt 16 der Brennstoffzellen-Abgasleitung 12 schließt in einem Brennstoffzellen-Abgaseintrittsbereich 18 eines Schalldämpfergehäuses 20 an die Schalldämpfereinheit 14 an. In einem Brennstoffzellen-Abgasaustrittsbereich 22 des Schalldämpfergehäuses 20 schließt ein stromabwärtiger Leitungsabschnitt 24 der Brennstoffzellen-Abgasleitung 12 an die Schalldämpfereinheit 14 an. Beispielsweise kann über den stromabwärtigen Leitungsabschnitt 24 der Brennstoffzellen-Abgasleitung 12 das von einer oder mehreren Brennstoffzellen eines Brennstoffzellensystems abgegebene Brennstoffzellen-Abgas B zur Umgebung abgegeben werden. Ein stromaufwärtiger Endbereich 26 des stromaufwärtigen Leitungsabschnitts 16 der Brennstoffzellen-Abgasleitung 12 kann dazu ausgebildet sein, an verschiedene Brennstoffzellen-Abgas als Prozessgas abgebende Systembereiche einer oder mehrerer Brennstoffzellen bzw. Brennstoffzellenstapel angeschlossen zu werden. Beispielsweise können an dem stromaufwärtigen Endbereich der Anodenbereich oder/und der Kathodenbereich der bzw. jeder Brennstoffzelle angeschlossen werden, um definiert das den Anodenbereich verlassende Prozessgas oder/und das den Kathodenbereich verlassende Prozessgas als Brennstoffzellen-Abgas B in die Brennstoffzellen-Abgasanlage 10 einzuleiten. Ferner kann beispielsweise über einen zur Umgebung offenen Leitungsbereich Umgebungsluft in die Brennstoffzellen-Abgasanlage 10 eingeleitet werden.

Zur Einstellung des in der Brennstoffzellen-Abgasanlage 10 generierten Gegendrucks bzw. auch der in dieses eingeleiteten Gasströme kann ein Gasstrom-Regulierventil 28 beispielsweise nahe dem stromaufwärtigen Endbereich 26 des stromaufwärtigen Leitungsabschnitts 16 der Brennstoffzellen-Abgasanlage 12 angeordnet sein. Im stromabwärtigen Leitungsabschnitt 24 kann ein Wasserstoffsensor 30 vorgesehen sein, um Information über die Wasserstoffkonzentration des durch den stromabwärtigen Leitungsabschnitt 24 strömenden Brennstoffzellen-Abgasstroms bereitzustellen. Dieser kann insbesondere dann Wasserstoff enthalten, wenn am Beginn bzw. vor dem Beginn des Brennstoffzellenbetriebs der Anodenbereich gespült wird und das aus dem Anodenbereich abgeleitete Prozessgas über die Brennstoffzellen-Abgasanlage 10 zur Umgebung abgegeben wird. Deutet das von dem Wasserstoffsensor 30 generierte Signal auf eine zu hohe Wasserstoffkonzentration hin, kann dem durch die Brennstoffzellen-Abgasanlage 10 geleiteten Brennstoffzellen-Abgas B beispielsweise durch entsprechende Ansteuerung des Gasstrom-Regulierventils 28 ein Luftanteil bzw. erhöhter Luftanteil über den vorangehend angesprochenen Leitungsbereich beigemengt werden, um somit eine geringere Wasserstoffkonzentration zu erreichen.

Stromaufwärts der Schalldämpfereinheit 14 kann eine Allgemein mit 31 bezeichnete Kondensatoreinheit vorgesehen sein, welche das Auskondensieren von im Brennstoffzellen-Abgas B transportierter Flüssigkeit bzw. Dampf, im Allgemeinen Wasserdampf, unterstützt. In der Schalldämpfereinheit 14 kann, wie nachfolgend beschrieben, derartige kondensierte Flüssigkeit aus dem Brennstoffzellen-Abgas B abgezogen, gesammelt und in den Brennstoffzellenprozess rückgespeist werden.

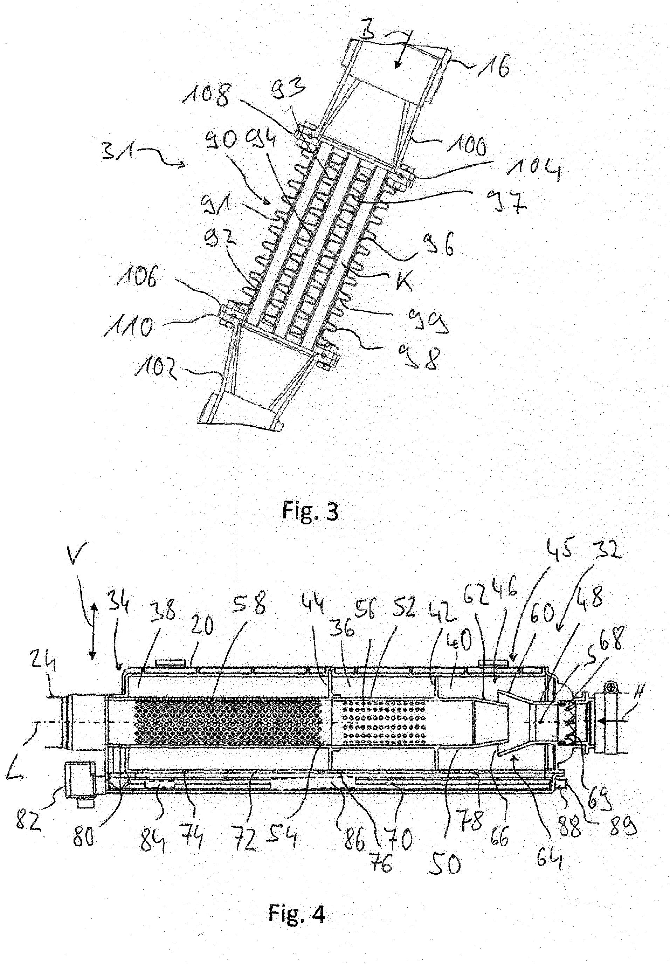

Mit Bezug auf die Fig. 4 wird nachfolgend der Aufbau bzw. die Funktion der Schalldämpfereinheit 14 detailliert erläutert.

Das Schalldämpfergehäuse 20 ist in Richtung einer Schalldämpfergehäuse-Längsachse L langgestreckt und ist in einem stromaufwärtigen Endbereich 32 zum Anschluss des stromaufwärtigen Leitungsabschnitts 16 der Brennstoffzellen-Abgasleitung 12 ausgebildet. In einem stromabwärtigen Endbereich 34 ist das Schalldämpfergehäuse 20 zum Anschluss des stromabwärtigen Leitungsabschnitts 24 der Brennstoffzellen-Abgasleitung ausgebildet. Beispielsweise können die Leitungsabschnitte 16, 24 unter Einsatz von Rohrschellen oder dergleichen an entsprechende Stutzen des Schalldämpfergehäuses 20 angebunden werden.

Im Inneren des Schalldämpfergehäuses 20 sind zwei Schalldämpferkammern 36, 38 sowie eine Flüssigkeitsabscheidekammer 40 gebildet. Die stromaufwärtige Schalldämpferkammer 36 ist durch eine Trennwand 42 von der Flüssigkeitsabscheidekammer 40 getrennt, und die stromabwärtige Schalldämpferkammer 38 ist durch eine Trennwand 44 von der stromaufwärtigen Schalldämpferkammer 36 getrennt. Der stromabwärtige Leitungsabschnitt 24 der Brennstoffzellen-Abgasleitung 12 ist zur stromabwärtigen Schalldämpferkammer 38 offen. Über einen in der Flüssigkeitsabscheidekammer 40 angeordneten Abscheideleitungsabschnitt 46 einer allgemein mit 45 bezeichneten Flüssigkeit-Abscheideeinheit ist der stromaufwärtige Leitungsabschnitt 16 der Brennstoffzellen-Abgasleitung 12 zu den beiden Schalldämpferkammern 36, 38 offen.

Der Abscheideleitungsabschnitt 46 der Flüssigkeit-Abscheideeinheit 45 umfasst einen im stromaufwärtigen Endbereich 32 des Schalldämpfergehäuses 20 an den stromaufwärtigen Leitungsabschnitt 16 der Brennstoffzellen-Abgasleitung 12 anschließenden, rohrartigen stromaufwärtigen Abscheideleitungsteil 48 sowie einen an die Trennwand 42 anschließenden bzw. diese durchsetzenden stromabwärtigen Abscheideleitungsteil 50. Der stromabwärtige Abscheideleitungsteil 50 des Abscheideleitungsabschnitts 46 kann an ein im Inneren des Schalldämpfergehäuses 12 sich erstreckendes ein- oder mehrstückig ausgebildetes Brennstoffzellen-Abgasrohr 52 anschließen bzw. mit diesem einstückig ausgebildet sein. Über eine Mehrzahl von in einer Rohrwandung 54 des Brennstoffzellen-Abgasrohrs 52 ausgebildeten Öffnungen 56 ist dieses zur stromaufwärtigen Schalldämpferkammer 36 offen. Über eine Mehrzahl von in der Rohrwandung 54 ausgebildeten Öffnungen 58 ist das Brennstoffzellen-Abgasrohr 52 zur stromabwärtigen Schalldämpferkammer 38 offen. Das Brennstoffzellen-Abgasrohr 52 erstreckt sich durch die die beiden Schalldämpferkammern 36, 38 voneinander trennende Trennwandung 44 hindurch bzw. kann zumindest teilweise mit dieser einstückig ausgebildet sein und schließt in dem stromabwärtigen Endbereich 34 des Schalldämpfergehäuses 20 an den stromabwärtigen Leitungsabschnitt 24 der Brennstoffzellen-Abgasleitung 12 an.

Man erkennt bei dieser Struktur, dass das durch die Schalldämpfereinheit 14 geleitete Brennstoffzellen-Abgas B das Schalldämpfergehäuse 20 im Wesentlichen ohne Strömungsablenkung geradlinig entlang der Schalldämpfergehäuse-Längsachse L durchströmen kann, so dass durch die Schalldämpfereinheit 14 keine wesentlichen Strömungswiderstände generiert werden. Gleichwohl besteht die Möglichkeit, durch die Kommunikation mit den verschiedenen Schalldämpferkammern 36, 38 durch Reflexion und Absorption Schall zu dämpfen. Hierzu kann beispielsweise in einer oder in beiden Schalldämpferkammern 36, 38 zusätzlich schalldämpfendes Material, wie z. B. poröses faserartiges oder geschäumtes Material, angeordnet sein. Es ist darauf hinzuweisen, dass auch mehr als zwei aufeinander folgende Schalldämpferkammern vorgesehen sein können oder dass im Innenraum des Schalldämpfergehäuses 20 auch nur eine einzige derartige Schalldämpferkammer vorgesehen sein kann. Ferner kann zumindest eine der Schalldämpferkammern als Resonatorkammer eines Helmholtz-Resonators wirken, und es können verschiedene der Schalldämpferkammern über zusätzliche Brennstoffzellen-Abgasrohre miteinander kommunizieren.

Der stromaufwärtige Abscheideleitungsteil 48 weist einen stromabwärtigen Endabschnitt 60 auf, welcher in Richtung einer Abgas-Hauptströmungsrichtung H entlang einer Strömungsmittenachse S sich beispielsweise im Wesentlichen konisch erweiternd ausgebildet ist. Gleichermaßen weist der stromabwärtige Abscheideleitungsteil einen stromaufwärtigen Endabschnitt 62 auf, der in der Abgas-Hauptströmungsrichtung H in diesem Bereich sich beispielsweise konisch erweiternd ausgebildet ist und in den stromabwärtigen Endabschnitt 60 des stromaufwärtigen Abscheideleitungsteils 48 eingreifend positioniert ist. Zwischen den in der Abgas-Hauptströmungsrichtung H entlang der Strömungsmittenachse S sich radial erweiternden Endabschnitten 60, 62 ist in einem Öffnungsbereich 64 des Abscheideleitungsabschnitts 46 eine im Wesentlichen ringartige Flüssigkeitsabscheideöffnung 66 gebildet.

Stromaufwärts des Öffnungsbereichs 64 ist beispielsweise in dem mit einem eine stromaufwärtigen Stirnwand des Schalldämpfergehäuses 20 bereitstellenden Gehäusedeckel einstückig ausgebildeten stromaufwärtigen Abscheideleitungsteil 48 oder im stromaufwärtigen Leitungsabschnitt 16 der Brennstoffzellen-Abgasleitung 12 eine Drallstrom-Erzeugungseinheit 68 angeordnet. Diese kann eine Mehrzahl von in Umfangsrichtung um die Strömungsmittenachse S aufeinander folgenden und bezüglich der Abgas-Hauptströmungsrichtung H angestellten, im Wesentlichen radial sich erstreckenden Strömungsablenkelementen 69 umfassen. Durch die Drallstrom-Erzeugungseinheit 68 wird in dem in der Abgas-Hauptströmungsrichtung H geleiteten Brennstoffzellen-Abgas B eine Drallströmung erzeugt. Aufgrund dieser Drallströmung und der darin entstehenden Fliehkräfte werden im Brennstoffzellen-Abgas B transportierte Flüssigkeitsanteile, beispielsweise Wassertröpfchen oder dergleichen, nach radial außen beaufschlagt und sich mit höherer Konzentration im radial äußeren Bereich des Brennstoffzellen-Abgasstroms ansammeln. Dieser radial äußere Teil des Brennstoffzellen-Abgasstroms kann zumindest teilweise durch die Flüssigkeitsabscheideöffnung 66 hindurch in die Flüssigkeitsabscheidekammer 40 abgeleitet werden, so dass in der Flüssigkeitsabscheidekammer 40 aus dem Brennstoffzellen-Abgasstrom extrahierte Flüssigkeit sich ansammeln kann.

In einem in einer Vertikalrichtung V bei in einem Fahrzeug montierter Brennstoffzellen-Abgasanlage 10 unteren Bereich des Schalldämpfergehäuses 20 ist eine Flüssigkeitssammelkammer 70 gebildet. Diese erstreckt sich vorzugsweise entlang der gesamten Länge des Schalldämpfergehäuses 20 vom stromaufwärtigen Endbereich 32 zum stromabwärtigen Endbereich 34 desselben und ist durch einen Gehäuseboden 72 von den beiden Schalldämpferkammern 36, 38 und auch der Flüssigkeitsabscheidekammer 40 getrennt. In Zuordnung zu jeder dieser Kammern ist in dem Gehäuseboden 72 jeweils wenigstens eine Flüssigkeitsdurchtrittsöffnung 74, 76 bzw. 78 ausgebildet. In jeder der Schalldämpferkammern 36, 38 bzw. auch der Flüssigkeitsabscheidekammer 40 sich ansammelnde Flüssigkeit kann durch die zugeordneten Flüssigkeitsdurchtrittsöffnungen 74, 76, 78 in die Flüssigkeitssammelkammer 40 gelangen und sich dort ansammeln.

In Zuordnung zu der Flüssigkeitssammelkammer 70 ist zumindest eine Flüssigkeitsableitöffnung 80 mit einem Flüssigkeitsabgabeventil 82 vorgesehen. Man erkennt in Fig. 4, dass bei in ein Fahrzeug eingebauter Brennstoffzellen-Abgasanlage das Schalldämpfergehäuse 20 in der Abgas-Hauptströmungsrichtung H nach unten geneigt ist, so dass derjenige Bereich der Flüssigkeitssammelkammer 70, in welchem die Flüssigkeitsableitöffnung 80 positioniert ist, im Wesentlichen den in der Vertikalrichtung V tiefsten Bereich der Flüssigkeitssammelkammer 70 bildet. Dies bedeutet, dass in der Flüssigkeitssammelkammer 70 enthaltene Flüssigkeit sich grundsätzlich im Bereich der Flüssigkeitsableitöffnung 80 bzw. des Flüssigkeitsabgabeventils 82 ansammelt, so dass, wenn das Flüssigkeitsabgabeventil 82 geöffnet ist, Flüssigkeit unter Schwerkrafteinwirkung aus der Flüssigkeitssammelkammer 70 ausströmt und beispielsweise in den Brennstoffzellenprozess zurückgespeist werden oder zur Umgebung abgegeben werden kann.

In Zuordnung zu der Flüssigkeitssammelkammer 70 kann ein in Fig. 4 prinzipartig dargestellter Flüssigkeitspegelsensor 84 vorgesehen sein, dessen Ausgangssignal anzeigt, welche Menge an Flüssigkeit sich in der Flüssigkeitssammelkammer 70 angesammelt hat. Ist diese Menge ausreichend groß, um die Flüssigkeit, also Wasser, im Brennstoffzellenbetrieb oder in anderen Systemen eines Fahrzeugs nutzen zu können, kann das Flüssigkeitsabgabeventil 82 geöffnet werden. Auch dann, wenn ein Schwellenpegel überschritten ist und die Gefahr besteht, dass Flüssigkeit zumindest aus dem am tiefsten liegenden Bereich der stromabwärtigen Schalldämpferkammer 38 nicht mehr in die Flüssigkeitssammelkammer 70 abströmen kann, kann das Flüssigkeitsableitventil 82 geöffnet werden, um Flüssigkeit aus der Flüssigkeitssammelkammer 70 abzugeben.

Ferner kann der Flüssigkeitssammelkammer 70 eine in Fig. 4 prinzipartig dargestellte Heizeinheit 86 zugeordnet sein. Diese kann durch elektrische Erregung die in der Flüssigkeitssammelkammer 70 sich ansammelnde Flüssigkeit erwärmen und somit ein Einfrieren derselben verhindern bzw. bereits die gefrorene Flüssigkeit wieder auftauen. Dies gewährleistet, dass jederzeit und insbesondere auch bei vergleichsweise niedriger Umgebungstemperatur Flüssigkeit aus der Flüssigkeitssammelkammer 70 abgegeben und beispielsweise im Brennstoffzellenbetrieb wieder genutzt werden kann.

Ferner kann in Zuordnung zu der Flüssigkeitssammelkammer 70 zumindest eine durch einen Wasserstoffabgabestutzen 88 bereitgestellte Wasserstoffabgabeöffnung 89 vorgesehen sein. Diese Wasserstoffabgabeöffnung 89 kann so positioniert sein, dass sie in der Vertikalrichtung V höher liegt als der höchstliegende Bereich der Flüssigkeitssammelkammer 70. Im Brennstoffzellenbetrieb bzw. beim Spülen des Anodenbereichs in die Brennstoffzellen-Abgasanlage 10 eingeleiteter Wasserstoff kann somit dann, wenn dieser über die Flüssigkeitsdurchtrittsöffnungen 74, 76, 78 in die Flüssigkeitssammelkammer 70 gelangt, sich im höchstgelegenen Bereich der Flüssigkeitssammelkammer 70 ansammeln, in welchem die Flüssigkeitssammelkammer 70 über die Wasserstoffabgabeöffnung 89 zur Umgebung offen ist. Somit kann in die Flüssigkeitssammelkammer 70 gelangender Wasserstoff, ohne dass die Gefahr besteht, dass eine kritische Wasserstoffkonzentration in der Flüssigkeitssammelkammer 70 gebildet wird, im Wesentlichen permanent zur Umgebung abgegeben werden.

Die Kondensatoreinheit 31 umfasst einen in Fig. 3 im Längsschnitt dargestellten Kondensatoreinheit-Körper 90, der vorzugsweise im Wesentlichen vollständig mit Metallmaterial aufgebaut ist. Im dargestellten Ausgestaltungsbeispiel weist der Kondensatoreinheit-Körper 90 drei nebeneinander liegend angeordnete Kondensatoreinheit-Leitungselemente 92, 94, 96 auf, welche jeweils einen Strömungskanal K für das Brennstoffzellen-Abgas B bereitstellen und zueinander parallel von dem Brennstoffzellen-Abgas B durchströmt werden. Die drei Kondensatoreinheit-Leitungselemente 92, 94, 96 stellen in ihrem Innenvolumen einen abgeflachten Strömungsquerschnitt für das diese durchströmende Brennstoffzellen-Abgas B bereit, beispielsweise mit näherungsweise rechteckiger oder abgeflacht runder Querschnittsgeometrie. Dies hat zur Folge, dass, bezogen auf die Strömungsquerschnittsfläche, eine vergleichsweise große Oberfläche zur Wärmeübertragung bereitsteht. Es ist darauf hinzuweisen, dass beispielsweise auch mehr als drei Kondensatoreinheit-Leitungselemente 92, 94, 96 an dem Kondensatoreinheit-Körper 90 vorgesehen sein können.

Die zur Wärmeübertragung auf ein den Kondensatoreinheit-Körper 90 umströmendes Medium M, beispielsweise Luft, zur Verfügung stehende Oberfläche kann dadurch noch vergrößert werden, dass an einer Außenseite der Kondensatoreinheit-Leitungselemente 92, 94, 96 Wärmeübertragungsrippen 98 vorgesehen sind, welche vorzugsweise im Wesentlichen parallel zu einer Strömungsrichtung des den Kondensatoreinheit-Körper 90 umströmenden Mediums M orientiert sind, um eine möglichst schnelle Umströmung und damit einen effizienten Wärmeabtrag zu gewährleisten. Beispielsweise können die Wärmeübertragungsrippen 98 durch an den flachen Außenseiten der Kondensatoreinheit-Leitungselemente 92, 94, 96 vorgesehene beispielsweise wellenartig ausgebildete Rippenelemente 91, 93, 97, 99 bereitgestellt sein, die mit zumindest einem der Kondensatoreinheit-Leitungselemente 92, 94, 96 in Wärmeübertragungskontakt stehen. Alternativ können die Wärmeübertragungsrippen 98 durch Ausformungen im Aufbaumaterial der Kondensatoreinheit-Leitungselemente 92, 94, 96 gebildet sein, die sich auch an der Innenseite, also an der vom Brennstoffzellen-Abgas B überströmten Oberfläche, abbilden, um auch dort eine vergrößerte Oberfläche zur Wärmeübertragung bereitzustellen.

Wird Luft, also Umgebungsluft, als das zur Kühlung genutzte Medium M eingesetzt, wird die Brennstoffzellen-Abgasanlage 10 so in ein Fahrzeug eingebaut, dass, ähnlich wie dies bei einem Kühler der Fall ist, die durch den Fahrtwind transportierte Luft die Kondensatoreinheit 31 effizient umströmen kann.

Es ist darauf hinzuweisen, dass alternativ zur Umströmung mit Luft der Kondensatoreinheit-Körper beispielsweise auch von einer Flüssigkeit umströmt werden kann, um in dieser Flüssigkeit Wärme aufzunehmen und diese beispielsweise in einem weiteren Wärmetauscher auf die in einem Fahrzeuginnenraum einzuleitende Luft übertragen zu können.

Zur Integration der Kondensatoreinheit 31 in den stromaufwärtigen Leitungsabschnitt 16 der Brennstoffzellen-Abgasleitung 12 weist die Kondensatoreinheit 31 ein stromaufwärtiges Kondensatoreinheit-Anschlusselement 100 und ein stromabwärtiges Kondensatoreinheit-Anschlusselement 102 auf. Mit jeweiligen plattenartigen Verbindungsbereichen 104 bzw. 106 können diese beispielsweise durch Verschraubung gasdicht und flüssigkeitsdicht an jeweilige plattenartige Verbindungsbereiche 108, 110 des Kondensatoreinheit-Körpers 90 angebunden werden.

Während für einen möglichst effizienten Wärmeübertrag der Kondensatoreinheit-Körper 90 aus Metallmaterial, wie z. B. Edelstahl oder Kupfer, hergestellt ist, können im Wesentlichen alle anderen Funktionsbereiche der Brennstoffzellen-Abgasanlage mit kostengünstigem und auch leichtem Kunststoffmaterial aufgebaut sein. Dies betrifft insbesondere die Leitungsabschnitte 16, 24, das Schalldämpfergehäuse 20 bzw. die im Inneren desselben angeordneten Systembereiche, wie z. B. die Trennwände 42, 44, alle Funktionsteile der Flüssigkeit-Abscheideeinheit 45 und die Drallstrom-Erzeugungseinheit 68. Der Einsatz von Kunststoffmaterial für diese Komponenten führt zu einem Aufbau mit geringem Gewicht, der überdies kostengünstig und mit großer Freiheit in der Formgebung hergestellt werden kann. Aufgrund des Umstandes, dass das Brennstoffzellen-Abgas B einen vergleichsweise hohen Anteil an Flüssigkeit, insbesondere Wasser, enthält, werden damit Korrosionsprobleme im Bereich der Brennstoffzellen-Abgasanlage 10 im Wesentlichen vollständig ausgeschlossen.

Die erfindungsgemäße Brennstoffzellen-Abgasanlage vereinigt für deren Betrieb bzw. für den Betrieb eines Brennstoffzellensystems in einem Fahrzeug vorteilhafte bzw. relevante Funktionen. Einerseits wird durch die Schalldämpfungsfunktion der Schalldämpfereinheit dafür gesorgt, dass beispielsweise durch die das Prozessgas durch die Brennstoffzelle leitenden Kompressoren entstehende Geräusche auf dem Strömungsweg des Brennstoffzellen-Abgases gemindert oder nahezu vollständig eliminiert werden. Andererseits besteht die Möglichkeit, einen Teil der im Brennstoffzellen-Abgas mitgeführten Flüssigkeit, insbesondere also Wasser, aus dem Brennstoffzellen-Abgas zu extrahieren, so dass der extrahierte Teil der Flüssigkeit nicht als Flüssigkeitsdampf mit dem Brennstoffzellen-Abgas in die Umgebung ausgestoßen wird, sondern entweder in flüssiger Form zur Umgebung abgegeben werden kann oder bei Bedarf in den Arbeitszyklus eines Brennstoffzellensystems oder andere Systeme rückgespeist werden kann. Das Entstehen einer kritischen Wasserstoffkonzentration insbesondere im Bereich der Schalldämpfereinheit wird durch die permanent bestehende Möglichkeit, Wasserstoff zur Umgebung hin abzugeben, vermieden. Zu dieser Funktionalität trägt insbesondere auch bei, dass das Brennstoffzellen-Abgas die Schalldämpfereinheit im Wesentlichen geradlinig durchströmen kann. Starke Abwinkelungen von das Brennstoffzellen-Abgas führenden Rohrabschnitten insbesondere im Inneren der Schalldämpfereinheit und dadurch eingeführte Strömungsumlenkungen sind vermieden. Da Wasser bzw. Wasserdampf und Wasserstoff im Betrieb eines Brennstoffzellensystems aus dem Brennstoffzellen-Abgas abgeleitet und erforderlichenfalls z.B. in den Brennstoffzellenprozess rückgespeist werden können, wird eine übermäßige Beaufschlagung der Umgebung eines Fahrzeugs mit derartigen Stoffen weitestgehend vermieden.

Es ist darauf hinzuweisen, dass eine derartige Brennstoffzellen-Abgasanlage auch bei stationären Brennstoffzellensystemen oder beispielsweise bei in Schiffen oder dergleichen vorgesehenen Brennstoffzellensystemen Anwendung finden kann.

## Patentansprüche

1. Brennstoffzellen-Abgasanlage für ein Brennstoffzellensystem, insbesondere in einem Fahrzeug, umfassend eine von Brennstoffzellen-Abgas (B) durchströmbare Brennstoffzellen-Abgasleitung (12) und Kondensatoreinheit (31) mit einem von dem Brennstoffzellen-Abgas (B) durchströmbaren Kondensatoreinheit-Körper (90).

2. Brennstoffzellen-Abgasanlage nach Anspruch 1, **dadurch gekennzeichnet, dass** stromabwärts der Kondensatoreinheit (31) eine Flüssigkeit-Abscheideeinheit (45) angeordnet ist.

3. Brennstoffzellen-Abgasanlage nach Anspruch 1 oder 2, **dadurch gekennzeichnet, dass** der Kondensatoreinheit-Körper (90) im Wesentlichen vollständig mit Metallmaterial aufgebaut ist oder/und wenigstens ein von dem Brennstoffzellen-Abgas (B) durchströmbares und an einer Außenseite von einem Kühlmedium (M) umströmbares Kondensatoreinheit-Leitungselement (92, 94, 96) vorzugsweise mit abgeflachtem Strömungsquerschnitt umfasst.

4. Brennstoffzellen-Abgasanlage nach Anspruch 3, **dadurch gekennzeichnet, dass** der Kondensatoreinheit-Körper (90) eine Mehrzahl von parallel zueinander von dem Brennstoffzellen-Abgas (B) durchströmbaren Kondensatoreinheit-Leitungselementen (92, 94, 96) umfasst.

5. Brennstoffzellen-Abgasanlage nach Anspruch 3 oder 4, **dadurch gekennzeichnet, dass** an der Außenseite wenigstens eines, vorzugsweise jedes Kondensatoreinheit-Leitungselements (92, 94, 96) eine Mehrzahl von Wärmeübertragungsrippen (98) vorgesehen ist.

6. Brennstoffzellen-Abgasanlage nach einem der Ansprüche 1-5, **dadurch gekennzeichnet, dass** die Kondensatoreinheit (31) ein mit dem Kondensatoreinheit-Körper (90) verbundenes stromaufwärtiges Kondensatoreinheit-Anschlusselement (100) zum Anschluss der Kondensatoreinheit (31) an die Brennstoffzellen-Abgasleitung (12) umfasst, oder/und dass die Kondensatoreinheit (31) ein mit dem Kondensatoreinheit-Körper (90) verbundenes stromabwärtiges Kondensatoreinheit-Anschlusselement (102) zum Anschluss der Kondensatoreinheit (31) an die Brennstoffzellen-Abgasleitung (12) umfasst.

7. Brennstoffzellen-Abgasanlage nach Anspruch 6, **dadurch gekennzeichnet, dass** das stromaufwärtige Kondensatoreinheit-Anschlusselement (100) mit Kunststoffmaterial aufgebaut ist, oder/und dass das stromabwärtige Kondensatoreinheit-Anschlusselement (102) mit Kunststoffmaterial aufgebaut ist.

8. Brennstoffzellen-Abgasanlage nach Anspruch 2 oder einem der Ansprüche 3-7, sofern auf Anspruch 2 rückbezogen, **dadurch gekennzeichnet, dass** die Brennstoffzellen-Abgasleitung (12) einen zu der Flüssigkeit-Abscheideeinheit (45) führenden stromaufwärtigen Leitungsabschnitt (16) und einen von der Flüssigkeit-Abscheideeinheit (45) weg führenden stromabwärtigen Leitungsabschnitt (24) umfasst, und dass die Kondensatoreinheit (31) im stromaufwärtigen Leitungsabschnitt (16) angeordnet ist.

9. Brennstoffzellen-Abgasanlage nach Anspruch 2 oder einem der Ansprüche 3-8, sofern auf Anspruch 2 rückbezogen, **dadurch gekennzeichnet, dass** die Flüssigkeit-Abscheideeinheit (45) einen stromaufwärtigen Abscheideleitungsteil (48), einen stromabwärtigen Abscheideleitungsteil (50) und einen Öffnungsbereich (64) im Angrenzungsbereich des stromabwärtigen Abscheideleitungsteils (50) an den stromaufwärtigen Abscheideleitungsteil (48) umfasst.

10. Brennstoffzellen-Abgasanlage nach Anspruch 9, **dadurch gekennzeichnet, dass** ein stromaufwärtiger Endabschnitt (62) des stromabwärtigen Abscheideleitungsteils (50) in einen stromabwärtigen Endabschnitt (60) des stromaufwärtigen Abscheideleitungsteils (48) derart eingreifend positioniert ist, dass zwischen dem stromaufwärtigen Endabschnitt (62) des stromabwärtigen Abscheideleitungsteils (50) und dem stromabwärtigen Endabschnitt (60) des stromaufwärtigen Abscheideleitungsteils (48) eine Flüssigkeitsabscheideöffnung (66) des Öffnungsbereich (64) gebildet ist.

11. Brennstoffzellen-Abgasanlage nach Anspruch 9 oder 10, **dadurch gekennzeichnet, dass** der Öffnungsbereich (64) zu einer Flüssigkeitssammelkammer (70) offen ist.

12. Brennstoffzellen-Abgasanlage nach einem der Ansprüche 9-11, **dadurch gekennzeichnet, dass** stromaufwärts des Öffnungsbereich (64) eine Drallstrom-Erzeugungseinheit (68) vorgesehen ist.

13. Brennstoffzellen-Abgasanlage nach Anspruch 12, **dadurch gekennzeichnet, dass** die Drallstrom-Erzeugungseinheit (68) eine Mehrzahl von bezüglich einer Strömungsmittenachse (S) in Umfangsrichtung aufeinanderfolgenden, bezüglich der Abgas-Hauptströmungsrichtung angestellten Strömungsablenkelementen (69) umfasst, oder/und dass die Drallstrom-Erzeugungseinheit (68) im Wesentlichen vollständig mit Kunststoffmaterial aufgebaut ist.

14. Brennstoffzellen-Abgasanlage nach Anspruch 8 und einem der Ansprüche 11 - 13, **gekennzeichnet durch** eine Schalldämpfereinheit (14), wobei die Schalldämpfereinheit (14) umfasst:
- ein Schalldämpfergehäuse (20) mit einem Brennstoffzellen-Abgaseintrittsbereich (18) und einem Brennstoffzellen-Abgasaustrittsbereich (22), wobei der stromaufwärtige Leitungsabschnitt (16) der Brennstoffzellen-Abgasleitung (12) an den Brennstoffzellen-Abgaseintrittsbereich (18) anschließt und der stromabwärtige Leitungsabschnitt (24) der Brennstoffzellen-Abgasleitung (12) an den Brennstoffzellen-Abgasaustrittsbereich (22) anschließt,
- wenigstens eine in dem Schalldämpfergehäuse (30) gebildete Schalldämpferkammer (36, 38),
wobei die wenigstens eine Schalldämpfer, (36, 38) durch einen Gehäuseboden (72) des Schalldämpfergehäuses (20) von der Flüssigkeitssammelkammer (70) getrennt ist, wobei in dem Gehäuseboden (72) wenigstens eine wenigstens eine Schalldämpferkammer (36, 38) mit der Flüssigkeitssammelkammer (70) zum Flüssigkeitsaustausch verbindende Flüssigkeitsdurchtrittsöffnung (74, 76) vorgesehen ist, und wobei an dem Schalldämpfergehäuse (20) wenigstens eine Flüssigkeitsableitöffnung (80) zum Ableiten von Flüssigkeit aus der wenigstens einen Flüssigkeitssammelkammer (70) vorgesehen ist.

15. Brennstoffzellen-Abgasanlage nach Anspruch 14, **dadurch gekennzeichnet, dass** die Schalldämpfereinheit (14) im Wesentlichen vollständig mit Kunststoffmaterial aufgebaut ist.

16. Brennstoffzellen-Abgasanlage nach einem der Ansprüche 1-15, **dadurch gekennzeichnet, dass** die Brennstoffzellen-Abgasleitung (12) im Wesentlichen vollständig mit Kunststoffmaterial aufgebaut ist, oder/und dass die Flüssigkeit-Abscheideeinheit (45) im Wesentlichen vollständig mit Kunststoffmaterial aufgebaut ist.
